# EUROPÄISCHE PATENTSCHRIFT

(11) **EP 3 053 785 B1**
(45) Veröffentlichungstag und Bekanntmachung des Hinweises auf die Patenterteilung: **11.10.2017**
(21) Anmeldenummer: 16154066.1
(22) Anmeldetag: 03.02.2016
(51) Int. Cl.: B60R 25/00, B60D 1/06, B60D 1/60

(54) **DIEBSTAHLSCHUTZVORRICHTUNG FÜR EINEN FAHRZEUGANHÄNGER**
ANTI-THEFT DEVICE FOR A VEHICLE TRAILER
DISPOSITIF ANTI-VOL POUR UNE REMORQUE DE VEHICULE

(30) Priorität: 03.02.2015 DE 202015100509 U
(43) Veröffentlichungstag der Anmeldung: 10.08.2016
(73) Patentinhaber: AL-KO Technology Austria GmbH, 6284 Ramsau im Zillertal (AT)
(72) Erfinder: BESTLER, Wolfgang, 89343 Jettingen-Scheppach (DE)
(74) Vertreter: Ernicke, Klaus Stefan

(56) Entgegenhaltungen:
- EP-A1- 1 316 445
- DE-A1- 10 249 940
- DE-A1- 19 839 933
- DE-U1-202011 000 034
- FR-A1- 2 458 410
- GB-A- 2 255 538
- GB-A- 2 506 258
- US-A- 3 391 555
- US-A- 5 681 053
- US-A1- 2002 092 330

## Beschreibung

Die Erfindung betrifft eine Schutzvorrichtung zur Sicherung eines Fahrzeuganhängers mit einer Anhängekupplung gegen Diebstahl.

Es ist in der Praxis bekannt, DiebstahlSchutzvorrichtungen für Fahrzeuganhänger mit einem Panzergehäuse auszubilden, das zum Aufsetzen auf die Anhängekupplung eines Fahrzeuganhängers vorgesehen ist. Das Panzergehäuse weist in der Regel eine Hebelkappe zum Bedecken des in die Schließstellung gebrachten Schließgriffs der Anhängekupplung auf, die schräg abfallende Seitenwandungen aufweist. Solche Schutzvorrichtungen sind nicht zur Benutzung auf Anhängekupplungen mit einer zusätzlichen Reibkupplung während des Schleppbetriebs geeignet, da die Hebelkappe die Bewegung des Betätigungsgriffs in die "Geschlossen"-Stellung blockiert. Ferner weisen die bisher bekannten Schutzvorrichtungen den Nachteil einer schlechten Passgenauigkeit auf. Während des Schleppbetriebs neigen sie dazu, durch die dynamischen Fahrtkräfte auf der Anhängekupplung zu schlackern, wobei Beschädigungen an der Anhängekupplung, insbesondere an deren Lack oder Kunststoffteilen auftreten können. Bei einem Aufbruchversuch werden bei den bekannten Schutzvorrichtungen häufig die auf das Panzergehäuse aufgebrachten Kräfte unkontrolliert auf die Anhängekupplung übertragen. Es kann somit vorkommen, dass zwar ein Diebstahl des Fahrzeuganhängers vermieden wird. Jedoch führt das unkontrollierte Anliegen der Schutzvorrichtung häufig zu Beschädigungen der Anhängekupplung, insbesondere des Schließgriffs oder der Kupplungsmechanik, die die Funktion der Anhängekupplung beeinträchtigen können oder zum Austausch der Anhängekupplung zwingen.

Aus GB 2 255 538 A ist eine Schutzvorrichtung für eine Anhängekupplung bekannt, die in zwei unterschiedlichen Positionen jeweils mit Spiel am Kupplungsgehäuse einer Anhängekupplung ansetzbar ist. In einer ersten Position überdeckt das Gehäuse der Schutzvorrichtung die Kugelkopfaufnahme der Anhängekupplung und sichert gegen ein nicht autorisiertes Ankuppeln des Fahrzeuganhängers an einem Zugfahrzeug. In der zweiten Position überdeckt das Gehäuse der Schutzvorrichtung teilweise den Betätigungsgriff und sichert gegen ein Lösen einer bestehenden Kupplungsverbindung. Die Schutzvorrichtung nach GB 2 255 538 A erfordert eine Größenabstimmung mit der Anhängekupplung, wobei stets ein Spalt zwischen dem Gehäuse und einem oder mehreren Konturen des Kupplungsgehäuses bzw. des Betätigungsgriffs frei bleiben müssen, damit das Gehäuse aufgesetzt oder wieder abgenommen werden kann. Ein Schließbolzen dieser Schutzvorrichtung wird in beiden Montage-Positionen zwischen dem Betätigungsgriff und einer Oberseite des Kupplungsgehäuses eingesteckt. Die Unterseite des Kupplungsgehäuses und/oder die Befestigungspunkte des Kupplungsgehäuses gegenüber der Zugdeichsel des Anhängers sind auch bei montierter Schutzvorrichtung zugänglich. Bei einem Durchtrennen des Schwenklagers des Betätigungsgriffs, bspw. mit einem Schwingschleifer, kann der Betätigungsgriff zusammen mit der Sicherungsvorrichtung leicht entfernt werden. Ferner neigt die Schutzvorrichtung zum Schlackern und Verkeilen, was Nachteile hinsichtlich der Bedienbarkeit bringt und Beschädigungen an der Anhängekupplung und insbesondere am Bediengriff begünstigt.

Aus US 5,681,053 A und DE 20 2011 000 034 U1 sind Schutzvorrichtungen für Anhängekupplungen bekannt, die lose bzw. ohne Führung auf ein Kupplungsgehäuse der Anhängekupplung aufgesetzt und mit einem Vorhängeschloss verriegelt werden.

Bügelförmige Diebstahlschutzvorrichtungen sind aus US 3 391 555 A, US 2002/092330 A1, DE 198 39 933 A1 und DE 102 49 940 A1 bekannt.

GB 2 506 258 A offenbart eine Diebstahlschutzvorrichtung mit einer ärmelförmigen Sicherungshülse, die über einen Betätigungsgriff einer Anhängekupplung geschoben wird.

EP 1 316 445 offenbart eine Kugelkopfkupplung mit einer integrierten Schließeinrichtung.

Aus FR 2 458 410 A1 ist eine kastenförmige Diebstahlschutzvorrichtung bekannt, die von vorn über die Kugelkopfaufnahme einer Anhängekupplung gestülpt und mit einem Sicherungskeil in Axialrichtung des Fahrzeugs hinter einem frei liegenden Betätigungsgriff verriegelt werden kann.

Die bisher bekannten Schutzvorrichtungen sind nicht optimal ausgebildet.

Es ist Aufgabe der vorliegenden Erfindung, eine verbesserte Schutzvorrichtung aufzuzeigen, die einen hohen Schutz gegen Aufbrechen und/oder Beschädigungen bietet und komfortabel bedienbar ist.

Die Erfindung löst diese Aufgabe durch die Merkmale im Hauptanspruch.

Die Schutzvorrichtung gemäß der vorliegenden Offenbarung weist eine Hebelkappe und zumindest zwei Seitenschilde auf, die sich von der Höhenlage der Hebelkappe nach unten erstrecken, so dass sie im montierten Zustand der Schutzvorrichtung das Kupplungsgehäuse der Anhängekupplung seitlich umgreifen. Zwischen der Hebelkappe und den Seitenschilden kann ein sich im Wesentlichen horizontal erstreckender Gabelbereich vorgesehen sein. Die Weite des Gabelbereichs kann an die Breite des Kupplungsgehäuses der Anhängerkupplung angepasst sein.

In den Seitenschilden sind Bolzenaufnahmen vorgesehen, in die ein Sicherungsbolzen der Schutzvorrichtung einsetzbar ist. Die Einsteckrichtung des Sicherungsbolzens ist im Wesentlichen quer zur Längsachse des Fahrzeuganhängers bzw. quer zur vorgesehenen Zugkraftrichtung der Anhängekupplung ausgerichtet.

Die Bolzenaufnahmen sind derart angeordnet, dass der Sicherungsgriff im montierten Zustand der Schutzvorrichtung die Unterseite des Kupplungsgehäuses umgreift, d.h., die dem Schließgriff der Anhängekupplung entgegengesetzte Gehäuseseite. Somit bilden das Panzergehäuse und der Sicherungsbolzen im montierten Zustand einen die Anhängekupplung an vier Seiten ringförmig umgreifenden Schutzmantel, der einen Zugriff auf den Schließgriff sowie die Befestigungsmittel, mit denen die Anhängekupplung am Fahrzeuganhänger befestigt ist, verwehrt. Auch ein Zugriff zu den inneren Bestandteilen der Anhängekupplung, insbesondere zu einem Schwenklager oder Lagerbolzen des Schließgriffs, wird durch die Schutzvorrichtung im montierten Zustand blockiert oder deutlich erschwert.

Gemäß einem ersten Aspekt der vorliegenden Offenbarung ist an zumindest einem der Seitenschilde ein nach innen gerichteter Führungszapfen vorgesehen, der im montierten Zustand der Schutzvorrichtung in eine korrespondierende Aufnahme am Kupplungsgehäuse eingreift. Durch diesen Führungszapfen wird das Panzergehäuse relativ zum Kupplungsgehäuse geführt und ggf. positioniert. Die Führung des Gehäuses kann beim Aufstecken und/oder im montierten Zustand wirken. Durch die Führung wird ein Verkanten oder Verrutschen der Schutzvorrichtung gegenüber dem Kupplungsgehäuse vermieden. Hierdurch lässt sich die Schutzvorrichtung leichter anbringen und wieder abnehmen, was insbesondere für körperlich schwächere Bedienpersonen zuträglich ist.

Die Führungsbolzen gewährleisten ferner, dass die Hebelkappe während der Aufsetzbewegung und im montieren Zustand in der gewünschten Soll-Position über dem Schließgriff der Anhängekupplung zu liegen kommt. Beschädigungen des Schließgriffs und insbesondere dessen Kunststoffummantelung beim Montieren und Demontieren der Schutzvorrichtung werden somit vermieden. Außerdem wird ein versehentliches Lösen bzw. Öffnen der Anhängekupplung durch unbeabsichtigtes Bewegen des Schließgriffs beim Abnehmen der Schutzvorrichtung vermieden, wodurch die Bediensicherheit verbessert wird.

Die Führungszapfen und die korrespondierenden Aufnahmen am Kupplungsgehäuse weisen bevorzugt eine hohe Stabilität auf, so dass Kräfteeinwirkungen von außen auf das Panzergehäuse und/oder den Sicherungsbolzen über die Führungszapfen am Kupplungsgehäuse abstützbar sind. Hierdurch wird erreicht, dass die Schutzvorrichtung während des Fahrbetriebs oder im Falle eines Aufbruchsversuchs im Wesentlichen starr mit dem Kupplungsgehäuse verbunden bleibt und nicht schlackert. Hierdurch werden die von der Schutzvorrichtung abgedeckten Bereiche der Anhängekupplung und ggf. des Fahrzeuganhängers vor Beschädigungen geschützt. Insbesondere kommt es nicht zu einem schlagenden Kontakt zwischen der Schutzvorrichtung und dem Schließgriff der Anhängekupplung oder dessen Kunststoffummantelung.

Die Führungszapfen und die korrespondierenden Aufnahmen am Kupplungsgehäuse sind bevorzugt aus einem Stahlwerkstoff gebildet. Im montierten Zustand der Schutzvorrichtung sind die Führungszapfen hinter den Seitenschilden verborgen und somit von außen nicht direkt angreifbar. Ferner wird durch den an der Unterseite des Kupplungsgehäuses angeordneten Sicherungsbolzen ein Zugriff zu den Führungszapfen verhindert. Es ist also im montierten Zustand der Schutzvorrichtung nahezu ausgeschlossen, die Führungszapfen mit einem Trennwerkzeug zu erreichen oder zu zerstören. Somit wird ein Verschieben oder Verkippen der Schutzvorrichtung wirksam vermieden.

Gemäß einem weiteren eigenständigen Aspekt der vorliegenden Erfindung, der für sich allein oder in Kombination mit den vorgenannten Ausbildungsmerkmalen umsetzbar ist, weist der die Unterseite des Kupplungsgehäuses umgreifende Sicherungsbolzen eine Sperrkontur zur Aufnahme eines am Panzergehäuse beweglich und abschließbar gelagerten Riegelkörpers auf, dessen Bewegungsrichtung quer zur Einsteckrichtung des Sicherungsbolzens orientiert ist. Der Riegelkörper wird insbesondere bevorzugt durch ein Schloss betätigt, wobei das Schloss und der Riegelkörper gegen Vandalismus gesichert in einem Schlossträger aufgenommen sind, der bevorzugt fest an einem der Seitenschilde angeordnet ist.

Die vorgenannte Kombination einer Sperrkontur mit einem Riegelkörper hat den Vorteil, dass der Sicherungsbolzen im abgesperrten Zustand der Schutzvorrichtung axialfest mit dem Panzergehäuse verbunden ist. Somit kann der Sicherungsbolzen nicht einfach mit einem Sägewerkzeug durchtrennt und dann vollständig aus der Schutzvorrichtung entfernt werden. Der über die Sperrkontur und den Riegelkörper arretierte Bolzenteil bleibt auch beim Abtrennen eines Bolzenzteils fest mit dem Panzergehäuse verbunden.

Die Führungszapfen und der Sicherungsbolzen bewirken gemeinsam eine belastbare Befestigung und Positionierung der Schutzvorrichtung an der Anhängekupplung. Sie führen ferner zu einer gezielten Einleitung von Kräften, die beispielsweise bei einem Aufbruchsversuch auf das Panzergehäuse ausgewirkt werden, in ebenfalls hoch belastbare Teile des Kupplungsgehäuses oder die Kräfte werden teilweise oder vollständig über die Befestigungsmittel des Kupplungsgehäuses auf das Chassis bzw. die Zugdeichsel des Fahrzeuganhängers übertragen. Hierdurch wird ein besonders effektiver Schutz der Anhängekupplung einerseits gegen Aufbrechen und andererseits gegen Beschädigungen der Kupplungsmechanik erreicht.

Die Aufsatzplatten oder Längsseiten des Kupplungsgehäuses weisen bevorzugt die oben erwähnte Aufnahme für die Führungsbolzen auf, die insbesondere eine nach oben hin geöffnete Schlitzform haben kann. Darüber hinaus sind bevorzugt Senkungen oder Nuten vorgesehen, in die ein Kopf eines Befestigungsmittels einsetzbar ist, mit dem die Anhängekupplung am Chassis / an der Zugdeichsel des Anhängers befestigt wird. Die Seitenwandungen dieser Senkungen oder Nuten stehen gegenüber der Wirkfläche für den Angriff des Befestigungsmittels nach außen hin vor. Sie verhindern, dass ein Werkzeug - insbesondere ein Hebel- oder Trennwerkzeug - an den Kopf des Befestigungsmittels angesetzt wird. Im montierten Zustand der Schutzvorrichtung sind die Befestigungsmittel also bevorzugt stirnseitig von den Seitenschilden der Schutzvorrichtung überdeckt und seitlich zumindest teilweise durch die Seitenwandungen der Senkungen oder Nuten geschützt.

In den Unteransprüchen, der nachfolgenden Beschreibung sowie den beigefügten Zeichnungen sind weitere vorteilhafte Ausbildungen der Erfindung angegeben.

Die Erfindung ist in den Zeichnungen beispielhaft und schematisch dargestellt. Es zeigen:
- Figur 1:: eine erste Ausführungsvariante einer Schutzvorrichtung mit einem Panzergehäuse zur Anbringung an einer Anhängekupplung und einem einsteckbaren Sicherungsbolzen in Explosionsdarstellung;
- Figur 2:: eine alternative Ausführungsvariante für den Sicherungsbolzen aus Figur 1;
- Figur 3:: die Schutzvorrichtung aus Figur 1 im montierten Zustand im Schrägbild;
- Figuren 4 und 5:: eine Frontansicht und eine Seitenansicht zu der montierten Schutzvorrichtung aus Figur 3;
- Figur 6:: eine Schutzvorrichtung zur Anbringung an einer Anhängekupplung mit einer Reibkupplung in Explosionsdarstellung;
- Figur 7:: eine alternative Ausführungsvariante eines Führungszapfens und einer Aufnahmenut der Schutzvorrichtung;
- Figur 8:: die Schutzvorrichtung und die Anhängekupplung aus Figur 6 im montierten Zustand bei abgesenktem Betätigungsgriff der Reibkupplung.

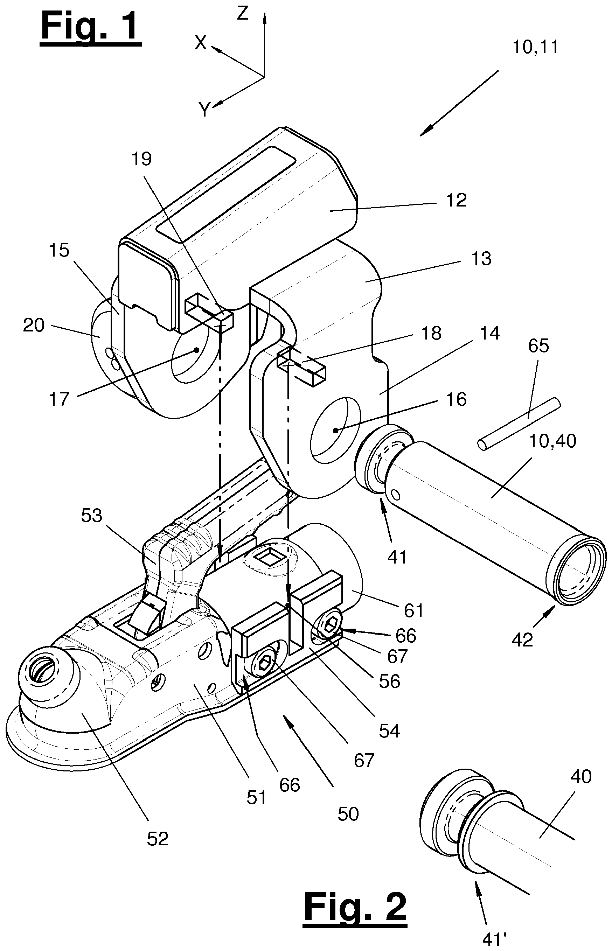

Eine bevorzugte Ausführungsform der Schutzvorrichtung (10) gemäß der vorliegenden Offenbarung ist in Figur 1 dargestellt. Sie umfasst ein Panzergehäuse (11) und einen Sicherungsbolzen (40). Das Panzergehäuse (11) kann auf beliebige Weise hergestellt sein. Bevorzugt ist es aus einem dickwandigen Metallblech, insbesondere einem Stahlblech, durch ein Umformverfahren hergestellt, beispielsweise durch Stanzen und Biegen. Alternativ kann das Panzergehäuse als Gußteil oder als Schweißkonstruktion vorgesehen sein.

In der vorliegenden Offenbarung werden Richtungsangaben wie "oben" und "unten" verwendet. Diese Angaben beziehen sich auf eine Anordnung der Schutzvorrichtung (10) im montierten Zustand an einer Anhängekupplung (50). Die Richtungsangaben "oben" und "unten" sind auf die in den Figuren als Hochachse (Z) angegebene Richtung bezogen. Wenn die Schutzvorrichtung (10) in einer anderen Lage angeordnet wird, sind die erwähnten Richtungsangaben entsprechend angepasst zu verstehen.

Die in Figur 1 dargestellte Anhängekupplung (50) weist ein Kupplungsgehäuse (51) mit einer Kupplungspfanne (52) auf. In der Kupplungspfanne (52) kann ein an einem Zugfahrzeug befestigter Kugelkopf aufgenommen werden. Bei der Anhängekupplung (50) handelt es sich somit um eine Zugkupplung in der Art einer Kugelkopf-Kupplung. Sie ist an der Zugdeichsel (61) oder einem anderen geeigneten Teil des Fahrwerks (Chassis) eines Fahrzeuganhängers befestigt und in der Axialrichtung des Fahrzeuganhängers ausgerichtet. Diese Axialrichtung des Fahrzeuganhängers bzw. der Anhängekupplung (50) ist in den Zeichnungen als Längsrichtung (Y) gekennzeichnet.

Die Anhängekupplung (50) weist einen Schließgriff oder Schließhebel (53) auf, der zwischen einer Offen-Stellung und Geschlossen-Stellung bewegbar ist. In der Offen-Stellung ist eine Verschlussmechanik an der Kupplungspfanne geöffnet, sodass ein Kugelkopf in die Kupplungspfanne eingesetzt oder aus dieser entfernt werden kann. In der Geschlossen-Stellung des Schließhebels (53) ist die Verschlussmechanik geschlossen, sodass ein Kugelkopf in der Kupplungspfanne fest aufgenommen ist bzw. kein Kugelkopf in die Kupplungspfanne eingesetzt werden kann.

Die in Figur 1 gezeigte Stellung des Schließhebels (53) ist die Geschlossen-Stellung. Die Schutzvorrichtung (10) und insbesondere die Hebelkappe (12) sind dazu ausgelegt, auf die Anhängekupplung (50) bzw. den Schließgriff (53) aufgesetzt zu werden, wenn dieser in der Geschlossen-Stellung ist, d.h. in der zum Kupplungsgehäuse (51) hin abgesenkten Stellung.

Die Schutzvorrichtung (10), insbesondere die Hebelkappe (12) des Panzergehäuses (11), verhindert zumindest eine Bewegung des Schließgriffs (53) in die Offenstellung und bevorzugt verwehrt sie durch eine umgreifende Abdeckung der Äußeren Konturen vollständig einen Zugang zu dem Schließgriff (53), sodass dieser nicht manipuliert werden kann. Durch die Schutzvorrichtung (10) wird also verhindert, dass ein an einem Zugfahrzeug angekuppelter Fahrzeuganhänger von dem Kugelkopf getrennt werden kann.

Ferner wird durch die Schutzvorrichtung verhindert, dass ein abgekuppelter Fahrzeuganhänger an ein Zugfahrzeug angekuppelt wird. Die Schutzvorrichtung (10) eignet sich somit für einen Diebstahlschutz des Fahrzeuganhängers im angekuppelten sowie im abgekuppelten Zustand.

Bei der in den Figuren gezeigten Ausführungsvariante der Schutzvorrichtung (10) schließt sich am unteren Ende der Hebelkappe (12) ein Gabelabschnitt (13) an, an den wiederum die sich nach unten erstreckenden Seitenschilde (14, 15) anschließen. Alternativ kann ein Panzergehäuse (11) der Schutzvorrichtung (10) ohne einen solchen Gabelabschnitt (13) ausgeführt sein.

In dem gezeigten Beispiel von Figur 1 befindet sich jeweils auf der Innenseite der Seitenschilde (14, 15) ein vorstehender Führungszapfen (18, 19). Dies stellt eine bevorzugte Ausführungsform dar, die eine besonders gute Kraftweiterleitung von dem Panzergehäuse auf das Kupplungsgehäuse bzw. die Befestigungsmittel ermöglicht. Alternativ können nur ein oder mehr als zwei Führungszapfen (18, 19) vorgesehen sein.

Die Führungszapfen (18, 19) sind fest mit dem jeweiligen Seitenschild (14, 15) verbunden und beispielsweise angeschweißt. Die inneren Enden der Führungszapfen (18, 19) korrespondieren in Form und Lage mit zugehörigen Aufnahmen (56, 57) am Kupplungsgehäuse (51). In dem Beispiel von Figur 1 sind die Aufnahmen (56, 57) als nach oben hin geöffnete Schlitze ausgebildet und an den sich in der Längsrichtung (Y) erstreckenden Seiten des Kupplungsgehäuses (51) angeordnet. Die Aufnahmen (56, 57) können die Seitenwandungen des Kupplungsgehäuses (51) integriert sein. Gemäß der in Figur 1 gezeigten alternativen Ausführung sind die Aufnahmen (56, 57) in einer ersten und einer zweiten Aufsatzplatte (54, 55) vorgesehen, die als separate Teile seitlich am Kupplungsgehäuse (51) angesetzt und zusammen mit dem Kupplungsgehäuse an der Zugdeichsel des Fahrzeuganhängers fixiert sind. Die Aufsatzplatten (54, 55) können einen Bestandteil der Schutzvorrichtung (10) bilden.

In dem gezeigten Beispiel sind für die gemeinsame Fixierung der Aufsatzplatten (54, 55) und des Kupplungsgehäuses (51) am Fahrgestell des Fahrzeuganhängers (hier an der Zugdeichsel) Schraubbolzen (67) vorgesehen. Alternativ können beliebige andere Befestigungsmittel (67) oder Fixiermittel vorgesehen sein, beispielsweise Nieten. Ferner können die Aufsatzplatten (54, 55) durch separate Befestigungsmittel mit dem Fahrgestell verbunden sein, bspw. durch eine von unten her auf die Zugdeichsel (61) zugreifende Verschraubung oder Nietung. Dementsprechend können die Aufsatzplatten durch eine zusätzliche Bodenplatte miteinander verbunden sein. Alternativ ist eine beliebige andere Anbringung möglich, bspw. durch eine das Kupplungsgehäuse umgreifende Klemm-Halterung.

Gemäß eine bevorzugten Ausführungsvariante ist die Anhängekupplung durch mindestens zwei parallel zueinander angeordnete Befestigungsmittel (67) mit dem Fahrzeuganhänger und insbesondere der Zugdeichsel (61) verbunden. Die Aufnahme (56, 57) für eine Führungszapfen (18, 19) ist dann bevorzugt an einer Längsseite des Kupplungsgehäuses (51) im Wesentlichen zwischen den Befestigungsmitteln (67) angeordnet. Diese Anordnung begünstigt einerseits die Krafteinleitung von der Schutzvorrichtung über die Aufnahmen (56, 57) auf die Zugdeichsel (61) und andererseits eine kompakte Bauweise.

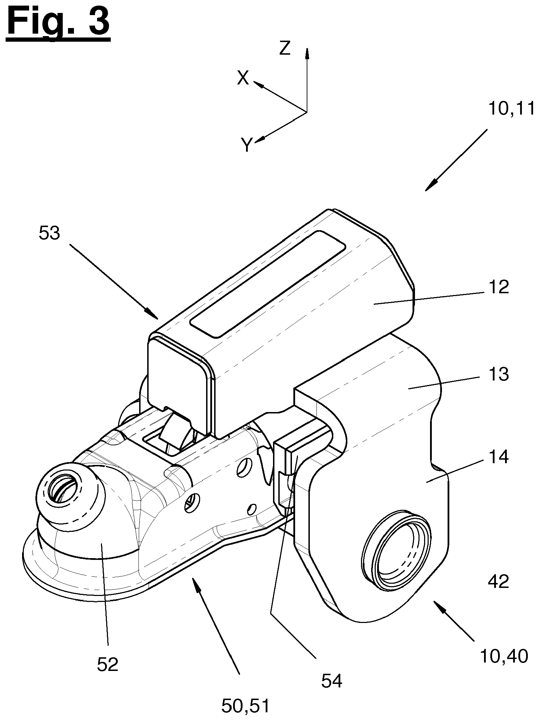

Die Seitenschilde (14, 15) haben eine solche flächenmäßige Erstreckung, dass sie im montierten Zustand der Schutzvorrichtung (10) die Aufnahmen (56,57) und insbesondere die Aufsatzplatten (54, 55) an der Anhängekupplung überdecken (vgl. Figur 3). Die Erstreckung der Seitenschilde (14, 15) ist ferner bevorzugt derart gewählt, dass sie einen Zugang zu den Befestigungsmitteln (67) versperren, mit denen das Kupplungsgehäuse (51) und/oder die Aufsatzplatten (54, 55) am Fahrzeuganhänger befestigt sind.

Die seitliche Kontur des Kupplungsgehäuses (51) und/oder der Aufsatzplatten (54,55) weist bevorzugt die oben erwähnten Senkungen oder Nuten (66) auf, zwischen deren Seitenwandungen jeweils ein Kopf eines Befestigungsmittels (67) aufgenommen werden kann, mit dem die Anhängekupplung (50) am Fahrzeuganhänger bzw. der Zugdeichsel (61) befestigt ist. Eine derartige Senkung oder Nut kann eine beliebige Form haben. Sie kann insbesondere als halboffene Langloch-Senkung (vgl. Figur 1) oder als Kreisloch-Senkung ausgebildet sein.

In den Seitenschilden (14, 15) sind in dem gezeigten Beispiel Bolzenaufnahmen (16, 17) in der Form von kreisrunden Öffnungen vorgesehen. In diese Aufnahmen (16, 17) wird der Sicherungsbolzen (40) eingesetzt. Die Bolzenaufnahmen (16, 17) definieren die Einsteckrichtung (X), die hier in der Querrichtung der Anhängekupplung (50) bzw. des Fahrzeuganhängers orientiert ist, und die Führung des Sicherungsbolzens (40) in der Schutzvorrichtung (10). Durch die Bolzenaufnahmen (16, 17) und die Führungszapfen (18, 19) ist ferner die Position der Schutzvorrichtung (10) im montierten Zustand vorgegeben. Sobald der Sicherungsbolzen (40) eingesetzt ist, sperrt er ein Abheben der Schutzvorrichtung (10) nach oben hin, da der Sicherungsbolzen mit der Unterseite der Anhängekupplung (50), insbesondere des Kupplungsgehäuses (51), oder dem Fahrgestell (hier der Zugdeichsel 61) kollidiert.

An dem zweiten Seitenschild (15) ist außenseitig ein Schlossträger (20) angeordnet. Der Schlossträger (20) überdeckt bevorzugt die Bolzenaufnahme (17) in dem zweiten Seitenschild (15) von außen her vollständig, sodass von der Außenseite des zweiten Seitenschilds (15) her kein Zugang zu dem eingesetzten Sicherungsbolzen (40) möglich ist.

An dem zum Schlossträger (20) bzw. zum Schloss (21) weisenden Ende des Sicherungsbolzens (40) ist eine Sperrkontor (41) vorgesehen, die in dem gezeigten Beispiel als Ringnut ausgebildet ist. In diese Ringnut greift in geschlossenem Zustand der Schutzvorrichtung (10) ein Riegelkörper (22) ein, der ebenfalls innerhalb des Schlossträgers (20) angeordnet und so gegen einen Zugriff von außen geschützt ist.

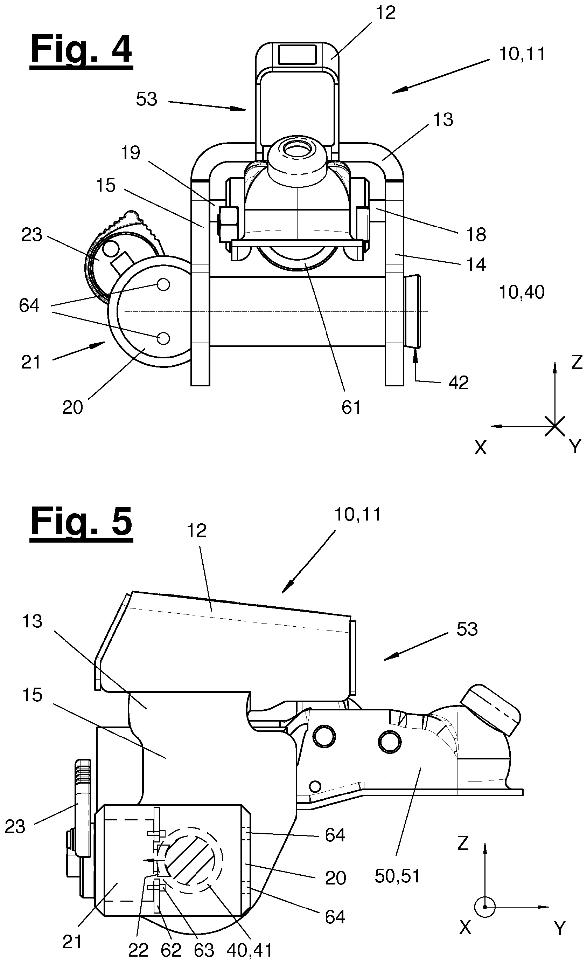

Figur 5 zeigt eine Seitenansicht auf die Schutzvorrichtung (10) im montierten Zustand und auf das besagte Ende des eingesetzten Sicherungsbolzens (40) sowie die dort angeordnete Ringnut (41) im Querschnitt. Der Riegelkörper (22) ist in dem gezeigten Beispiel in der Längsrichtung (Y) des Zugfahrzeugs bzw. der Anhängekupplung (50) verschieblich gelagert und wird durch das in dem Schlossträger (20) angeordnete Schloss (21) betätigt. Mit anderen Worten ist die Bewegungsrichtung (Y) des Riegelkörpers (22) quer zur Einsteckrichtung (X) des Sicherungsbolzens (40) orientiert.

Wenn der Riegelkörper (22) in die Ringnut (41) des eingesetzten Sicherungsbolzens (40) eingreift, wird dieser gegen ein Herausziehen aus dem zweiten Seitenschild (15), d.h. gegen eine Verschiebung in der Querrichtung (X) der Anhängekupplung (50) gesichert. Es kann jedoch vorgesehen sein, dass der Sicherungsbolzen (40) in der arretierten Lage um seine Längsachse drehbar ist. Die Drehbarkeit des Sicherungsbolzens (40) ist vorteilhaft, weil sie eine Manipulation, insbesondere ein Durchsägen des Sicherungsbolzens (40) erschwert.

An dem gegenüberliegenden Ende des Sicherungsbolzens (40) ist ein in Radialrichtung überstehender Kragen (42) vorgesehen. Durch diesen überstehenden Kragen (42) wird vermieden, dass entweder der Sicherungsbolzen (40) in der Querrichtung (X) durch die Bolzenaufnahme (16) hindurchgeschlagen werden kann oder andererseits der erste Seitenschild (14) über das besagte Ende des Sicherungsbolzens (40) hinaus aufgebogen werden kann (vgl. Figuren 3 bis 5). Der Kragen (42) und die Ringnut (41) verhindern somit im arretierten Zustand der Schutzvorrichtung (10) ein Aufhebeln der Seitenschilde (14, 15).

Figur 3 zeigt die Schutzvorrichtung (10) gemäß der vorliegenden Offenbarung im montierten Zustand im Schrägbild. Der Schließgriff (53) ist vollständig in der Hebelkappe (12) aufgenommen und nach obenhin, sowie in Längs- und Querrichtung (X, Y) zu beiden Seiten hin durch die Wandungen der Hebelkappe (12) abgedeckt. Die Hebelkappe (12) ist bevorzugt an den Schließgriff (53) und ggfs. die Außenkontur der Anhängekupplung (50) angepasst und derart dimensioniert, dass die Seitenwandungen im Wesentlichen nahe an der Außenkontur des Schließgriffs (53) zu liegen kommen. Die Dimensionierung ist insbesondere bevorzugt so gewählt, dass die Hebelkappe in der Soll-Position den Schließgriff (53) nicht berührt. Somit besteht bevorzugt keine kraftleitende, d.h. formschlüssige Kontaktierung zwischen dem Panzergehäuse (11), insbesondere der Hebelkappe (12), und dem Schließgriff (53). Es kann dabei ausreichend sein, dass die innere Weite der Hebelkappe (12) nur geringfügig größer ist als das Außenmaß des Schließgriffs (53), beispielsweise um ein Distanzmaß von 0,5mm bis 3mm, insbesondere um 1mm bis 2mm.

Durch das oben beschriebene Zusammenwirken der Führungszapfen (18, 19) mit den Aufnahmen (56, 57) am Kupplungsgehäuse (51) bzw. den Aufsatzplatten (54, 55) wird auch im Schleppbetrieb des Fahrzeuganhängers die Aufrechterhaltung der Ist-Position der Schutzvorrichtung (10) in der genannten Soll-Position gewährleistet.

Figur 4 zeigt eine Frontansicht der Schutzvorrichtung (10) in der montierten Position. Die Hebelkappe (12) ist bevorzugt in der Höhenerstreckung derart ausgebildet, dass die Seitenwandungen der Hebelkappe (12) und/oder der ggfs. vorgesehene Gabelabschnitt (13) im montierten Zustand sehr nah an die obere Grenzkontur des Kupplungsgehäuses (51) heranreichen. Es kann auch vorgesehen sein, dass die Hebelkappe (12) im montierten Zustand auf der oberen Kontur des Kupplungsgehäuses (51) aufliegt. In einem solchen Fall ist es vorteilhaft, wenn an der vorgesehenen Kontaktstelle Dämpfungselemente vorgesehen sind, um ein Scheuern oder Anschlagen des Panzergehäuses gegenüber dem Kupplungsgehäuse (51) zu vermeiden.

Der Sicherungsbolzen (40) umgreift im montierten Zustand die Unterseite der Anhängekupplung (50), so dass das Panzergehäuse (11) zusammen mit dem Sicherungsbolzen (40) eine die Anhängekupplung (50) ringförmig einschließende Schutzummantelung bildet. In dem in Figur 4 gezeigten Beispiel besteht noch ein Freiraum (Spiel) zwischen dem Sicherungsbolzen (40) und der unteren Grenzkontur der Anhängekupplung (50) bzw. der Zugdeichsel (61). Alternativ kann vorgesehen sein, dass der Sicherungsbolzen (40) im montierten Zustand der Schutzvorrichtung (10) an der unteren Grenzkontur anliegt, wobei auch hier die Vorsehung von Dämpfungselementen vorteilhaft ist.

An dem Schlossträger (20) können Zugangsöffnungen (64) vorgesehen sein, durch die ein Werkzeug in den Schlossträger (21) einführbar ist. Die Zugangsöffnungen können für die Erstmontage einen Zugang zu einem Befestigungsmittel (63) des Schlosses (20) gewähren. In dem Beispiel von Figuren 4 und 5 wird das Schloss (21) durch zwei Schrauben oder Nieten mit einer Innenwandung (62) im Schlossträger verbunden. Das oder die Befestigungsmittel (63) und die Zugangsöffnungen (64) sind bevorzugt derart angeordnet, dass zwischen Ihnen der Sicherungsbolzen (40) im eingesetzten Zustand zu liegen kommt. Hierdurch wird erreicht, dass der Sicherungsbolzen (40) im eingesteckten Zustand einen Zugang zu den ein oder mehreren Befestigungsmitteln (63) versperrt, mit denen das Schloss (21) im Schlossträger (20) fixiert ist.

Der Sicherungsbolzen (40) kann bevorzugt an dem Panzergehäuse (11) und insbesondere an einem der Seitenschilde (14, 15) gegen Verlieren gesichert gelagert sein. Durch die verliersichere Lagerung wird gewährleistet, dass der Sicherungsbolzen (40) nicht vollständig von dem Panzergehäuse (11) getrennt werden kann und bei Nichtgebrauch der Schutzvorrichtung (10) verlorengeht. Eine Verliersicherung kann beliebig ausgebildet sein.

In dem Beispiel von Figur 1 ist am Sicherungsbolzen (40) eine Quer-Bohrung zur Aufnahme eines Sicherungszapfens (65) vorgesehen. Der Sicherungsbolzen (40) kann zunächst in die Bolzenaufnahme (16) eingeführt und so weit eingeschoben werden, dass die Quer-Bohrung im Bereich zwischen dem ersten und dem zweiten Seitenschild (14, 15) angeordnet wird. Anschließend kann der Sicherungszapfen in die Quer-Bohrung am Sicherungsbolzen (40) eingeführt werden, wobei in Ende des Sicherungszapfens (65) über die Radialwandung des Sicherungsbolzens (40) übersteht. Dieser überstehende Teil verhindert, dass das Sicherungsbolzen vollständig aus dem Panzergehäuse entfernt werden kann, da er am ersten Seitenschild (14) anschlägt. Der Sicherungszapfen (65) ist bevorzugt dauerhaft in der vorgenannten Lage fixiert, bspw. durch Anschweißen oder Vernieten. Alternativ kann eine lösbare Fixierung vorgesehen sein.

Figur 2 zeigt eine alternative Ausführungsvariante für das zum zweiten Seitenschild (15) weisende Ende des Sicherungsbolzens (40) aus Figur 1 zur Bildung einer Verliersicherung. Bei dieser Variante ist der zum Schlossträger (21) bzw. zum zweiten Seitenschild (15) weisende Endbereich des Sicherungsbolzens (40) mit einem insgesamt vergrößerten Durchmesser vorgesehen. Entsprechend kann die zweite Bolzenaufnahme (17) in Figur 1 vergrößert ausgeführt sein und insbesondere mit einem größeren Innendurchmesser als die erste Bolzenaufnahme (16). Die gemäß Figur 2 veränderte Sperrkontur (41) bildet in Zusammenwirken mit der ersten, im Durchmesser kleineren Bolzenaufnahme (16) eine Verliersicherung (41'), d.h. sie verhindert ein vollständiges Herausziehen des Sicherungsbolzens (40) aus dem ersten Seitenschild (14). Der Sicherungsbolzen kann in die Bolzenaufnahme (16) eingesetzt werden, bevor der erste Seitenschild (14) in die in Figur 1 gezeigte Lage gebogen wird bzw. bevor der Seitenschild (14) dauerhaft mit der Hebelkappe (12) verbunden, insbesondere verschweißt wird. Alternativ kann der Bolzen von der Seite des zweiten Seitenschilds (15) her eingesetzt werden, bevor der Schlossträger (20) am zweiten Seitenschild (15) angebracht wird. Der Kragen (42) kann ggfs. nach dem Einsetzen am Sicherungsbolzen (40) angeformt werden, bspw. durch Prägen. Alternativ kann eine beliebige anders ausgebildete Verliersicherung vorgesehen sein.

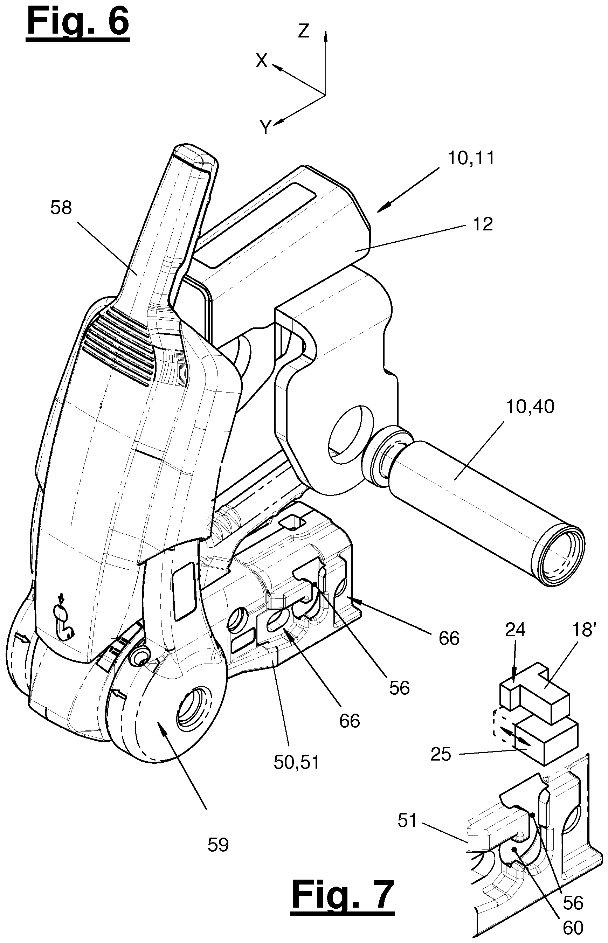

Figuren 6 und 7 zeigen eine alternative Ausführungsform einer Anhängekupplung (50), die eine zusätzliche Reibkupplung (59) und einen zum Schließen der Reibkupplung (59) vorgesehenen Betätigungsgriff (58) aufweist. Die Hebelkappe (12) der Schutzvorrichtung (10) weist bevorzugt im Wesentlichen senkrecht abfallende Seitenwandungen auf, die den Schließgriff (53) der Anhängekupplung (50) seitlich derart eng übergreifen und so schmal ausgebildet sind, dass der Betätigungsgriff (58) der Reibkupplung (59) in seine Geschlossen-Stellung absenkbar ist, ohne mit der Außenkontur der Hebelkappe (12) zu kollidieren. Mit anderen Worten ist die Hebelkappe (12) bevorzugt angepasst an die äußere Grenzkontur des Schließgriffs (53) und an die innere Grenzkontur des Betätigungsgriffs (58) ausgebildet und zwar in der Art, dass die Seitenwandungen der Hebelkappe (12) im montierten Zustand der Schutzvorrichtung (10) zwischen diesen Grenzkonturen aufnehmbar sind. Die oben beschriebene Führung bzw. Positionierung der Schutzvorrichtung (10) über die Führungszapfen (18, 19) begünstigt eine einfache Montage der Schutzvorrichtung (10) in dieser Lage. Ferner wird durch die Führung bzw. Positionierung erreicht, dass die Schutzvorrichtung (10) im Schleppbetrieb nicht durch die dynamischen Fahrtkräfte nach oben schlagen und dadurch den Betätigungsgriff (58) bewegen bzw. daran anstoßen kann. Somit wird ein unerwünschtes Lösen der Reibkupplung (59) im Schleppbetrieb vermieden.

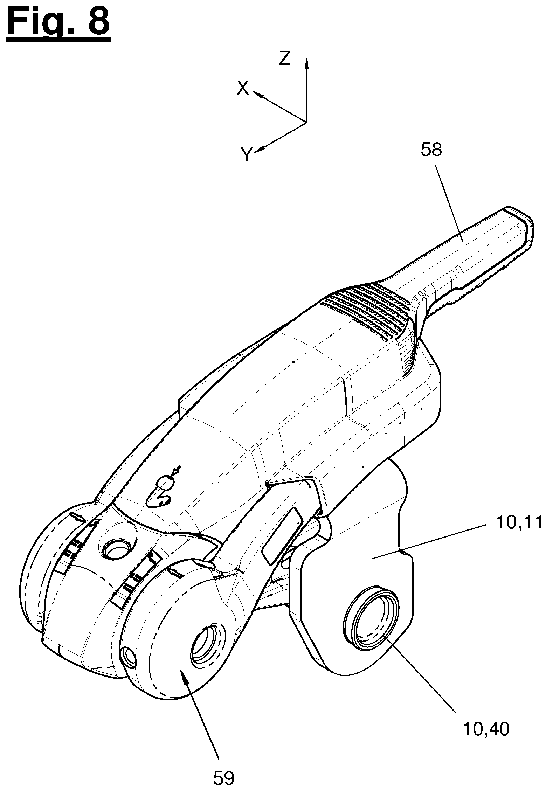

Figur 8 zeigt den Betätigungsgriff (58) der Reibkupplung (59) in der Geschlossen-Stellung. Die Schutzvorrichtung (10) ist in dem gezeigten Beispiel im montierten Zustand, wobei das Panzergehäuse (10) und insbesondere die Hebelkappe (12) in dem Freiraum aufgenommen ist, der zwischen den Grenzkonturen des Schließgriffs (53) der Anhängekupplung (50) und dem Betätigungsgriff (58) der Reibkupplung (59) liegt. Folglich ermöglicht die Schutzvorrichtung (10) gemäß der vorliegenden Offenbarung auch das Sichern eines Fahrzeuganhängers mit einer Reibkupplung (59) gegen Diebstahl und zwar im angekuppelten Zustand und bei Aktivierung der Reibkupplung (59) sowie im abgekuppelten Zustand.

Figur 7 zeigt eine alternative Ausführungsvariante für einen Führungszapfen (18'). Dieser weist am inneren Ende eine T-förmige Erweiterung (24) auf. Die überstehenden Bereiche der T-förmigen Erweiterung (24) können in eine innenseitige Nut an der Aufnahme (56) eingreifen. Durch die T-förmige Erweiterung (24) können einerseits die Führungseigenschaften des Zapfens (18') verbessert und andererseits ein zusätzlicher Schutz gegen ein Aufbiegen der Seitenschilde (14,15) erreicht werden.

Figur 7 zeigt ferner einen zusätzlichen Sperrkörper (25), der gemäß einer bevorzugten Ausführungsvariante zusätzlich an der Schutzvorrichtung (10) und insbesondere an dem zweiten Seitenschild (15) vorgesehen sein kann (d.h. gegenüber der Darstellung in Figur 7 gespiegelt). Der zusätzliche Sperrkörper (25) ist im Wesentlichen parallel zur Einsteckrichtung (X) des Sicherungsbolzens (40) beweglich und abschließbar gelagert. Er kann insbesondere gemeinsam mit dem Riegelkörper (22) durch das Schloss (21) betätigbar sein. Im gesperrten Zustand greift der Sperrkörper (25) in eine Sperröffnung (60) am Kupplungsgehäuse (51) ein. Die Sperröffnung kann auf beliebige Weise ausgebildet und an beliebig geeigneter Position vorgesehen sein. Bei dem in Figur 6 und 7 gezeigten Beispiel sind die Aufnahmen (56, 57) für die Führungszapfen (18,18',19) sowie die Sperröffnung (60) in der Außenkontur des Kupplungsgehäuses (51) integriert. Sie können alternativ einzeln oder gemeinsam in separaten Aufsatzplatten (54, 55) angeordnet sein, insbesondere in der oben zu Figur 1 beschriebenen Art.

Ein Panzergehäuse (11) kann aus einem beliebigen Material gefertigt und gegebenenfalls mehrstückig aufgebaut sein. Es kann beispielsweise eine Hebelkappe als Gussteil oder Schmiedestück und daran angeschweißte Seitenschilde (14, 15) aufweisen. Ein Sicherungsbolzen (40) kann eine beliebige andere Grundform als die gezeigte Zylinderform haben, d.h. insbesondere eine Grundform mit einem rechteckigen oder ovalen Querschnitt.

Die Anhängekupplung (50) kann ggfs. derart ausgebildet sein, dass der Schließgriff (53) nur von der Offen-Stellung in die Geschlossen-Stellung bewegbar ist, wenn in der Kupplungspfanne (52) ein Kugelkopf aufgenommen ist. Die Schutzvorrichtung kann in einem solchen Fall einen separaten Kugelkopf umfassen, der im abgekuppelten Zustand des Fahrzeuganhängers in die Kupplungspfanne einsetzbar ist.

### BEZUGSZEICHENLISTE

- 10: Schutzvorrichtung
- 11: Panzergehäuse
- 12: Hebelkappe
- 13: Gabelabschnitt
- 14: Erster Seitenschild
- 15: Zweiter Seitenschild
- 16: Erste Bolzenaufnahme
- 17: Zweite Bolzenaufnahme
- 18: Erster Führungszapfen
- 18': Erster Führungszapfen
- 19: Zweiter Führungszapfen
- 20: Schlossträger
- 21: Schloss
- 22: Riegelkörper
- 23: Abdeckung
- 24: T-förmige Erweiterung
- 25: Sperrkörper
- 40: Sicherungsbolzen
- 41: Sperrkontur / Nut
- 41': Sperrkontur / Verliersicherung
- 42: Kragen
- 50: Anhängekupplung
- 51: Kupplungsgehäuse
- 52: Kupplungspfanne
- 53: Schließgriff
- 54: Erste Aufsatzplatte
- 55: Zweite Aufsatzplatte
- 56: Erste Aufnahme / Nut
- 57: Zweite Aufnahme / Nut
- 58: Betätigungsgriff
- 59: Reibkupplung
- 60: Sperröffnung
- 61: Zugdeichsel / Fahrgestell
- 62: Innenwandung
- 63: Befestigungsmittel / Schraube für Schloss
- 64: Zugangsöffnung
- 65: Sicherungszapfen / Verliersicherung
- 66: Senkung / Nut
- 67: Schraubbolzen / Befestigungsmittel / Fixiermittel für Anhängekupplung gegenüber Fahrzeug
- X: Einsteckrichtung des Sicherungsbolzens / Querrichtung des Fahrzeuganhängers
- Y: Bewegungsrichtung des Riegelkörpers / Längsrichtung des Fahrzeuganhängers
- Z: Hochachse

## Patentansprüche

1. Schutzvorrichtung mit einem Panzergehäuse (11) zum Aufsetzen auf eine Anhängekupplung (50) eines Fahrzeuganhängers, wobei das Panzergehäuse (11) eine Hebelkappe (12) zum Abdecken des in die Schließstellung gebrachten Schließgriffs (53) der Anhängekupplung (50) sowie mindestens zwei sich von der Hebelkappe nach unten erstreckende Seitenschilde (14, 15) aufweist, die im montierten Zustand der Schutzvorrichtung (10) das Kupplungsgehäuse (51) seitlich umgreifen, und wobei in den Seitenschilden (14, 15) Bolzenaufnahmen (16, 17) vorgesehen sind, in die ein Sicherungsbolzen (40) der Schutzvorrichtung (10) einsetzbar ist, der im montierten Zustand die dem Schließgriff (53) entgegengesetzte Seite des Kupplungsgehäuses (51) umgreift, wobei an zumindest einem der Seitenschilde (14, 15) ein nach innen gerichteter Führungszapfen (18, 19) vorgesehen ist, der im montierten Zustand der Schutzvorrichtung (10) in eine korrespondierende Aufnahme (56, 57) am Kupplungsgehäuse (51) eingreift.

2. Schutzvorrichtung nach Anspruch 1, wobei der Sicherungsbolzen (40) eine Sperrkontur (41) zur Aufnahme eines am Panzergehäuse (11) beweglich und abschließbar gelagerten Riegelkörpers (22) aufweist, dessen Bewegungsrichtung (Y) quer zur Einsteckrichtung (X) des Sicherungsbolzens (40) orientiert ist.

3. Schutzvorrichtung nach einem der vorhergehenden Ansprüche, wobei der Sicherungsbolzen (40) eine zylindrische Grundform hat und die Sperrkontur (41) als Ringnut oder ringförmiger Überstand über die Zylinderfläche ausgebildet ist.

4. Schutzvorrichtung nach einem der vorhergehenden Ansprüche, wobei an einem der Seitenschilde (14, 15) ein Schlossträger (20) angeordnet ist, in dem ein Schloss (21) quer zur Einsteckrichtung (Y) des Sicherungsbozens (40) aufgenommen ist.

5. Schutzvorrichtung nach einem der vorhergehenden Ansprüche, wobei der Sicherungsbolzen (40) in zumindest einem der Seitenschilde (14, 15) verliersicher gelagert ist.

6. Schutzvorrichtung nach einem der vorhergehenden Ansprüche, wobei am inneren Ende eines Führungszapfens (18') eine T-förmige Erweiterung (24) vorgesehen ist.

7. Schutzvorrichtung nach einem der vorhergehenden Ansprüche, wobei die Schutzvorrichtung (10) einen zusätzlichen Sperrkörper (25) aufweist, der im Wesentlichen parallel zur Einsteckrichtung (X) des Sicherungsbolzens (40) beweglich und abschließbar gelagert ist und der im gesperrten Zustand in eine Sperröffnung (60) am Kupplungsgehäuse (51) eingreift.

8. Schutzvorrichtung nach einem der vorhergehenden Ansprüche, wobei der Sicherungsbolzen (40) im eingesteckten Zustand einen Zugang zu Befestigungsmitteln (63) versperrt, mit denen das Schloss (21) im Schlossträger (20) fixiert ist.

9. Schutzvorrichtung nach einem der vorhergehenden Ansprüche, wobei die Schutzvorrichtung (10) mindestens eine Aufsatzplatte (54, 55) umfasst, die seitlich am Kupplungsgehäuse (51) ansetzbar ist, und wobei die mindestens eine Aufsatzplatte (54, 55) fest mit der Zugdeichsel des Fahrzeuganhängers verbindbar ist und mindestens eine Aufnahme (56, 57) für den oder die Führungszapfen (18, 19) umfasst.

10. Anhängekupplung mit einer Schutzvorrichtung nach einem der
vorhergehenden Ansprüche, wobei die Anhängekupplung (50) einen Betätigungsgriff (58) für eine Reibkupplung (59) aufweist und die
Hebelkappe (12) im Wesentlichen senkrecht abfallende Seitenwandungen aufweist, die den Schließgriff (53) der Anhängekupplung (50) seitlich derart eng übergreifen, dass der Betätigungsgriff (58) der Reibkupplung (59) in seine Geschlossen-Stellung absenkbar ist.

## Claims

1. Security device having an armoured housing (11) for positioning on a trailer coupling (50) of a vehicle trailer, wherein the armoured housing (11) has a lever cap (12) for covering the closing handle (53), once moved into the closed position, of the trailer coupling (50), and also has at least two side plates (14, 15), which extend downwards from the lever cap and, in the installed state of the security device (10), engage laterally around the coupling housing (51), and wherein the side plates (14, 15) contain bolt mounts (16, 17), into which can be inserted a securing bolt (40) of the security device (10), said securing bolt, in the installed state, engaging around that side of the coupling housing (51) which is opposite the closing handle (53), wherein at least one of the side plates (14, 15) has provided on it an inwardly directed guide stub (18, 19), which, in the installed state of the security device (10), engages in a corresponding mount (56, 57) on the coupling housing (51).

2. Security device according to Claim 1, wherein the securing bolt (40) has a blocking contour (41) for accommodating a locking body (22), which is mounted in a movable and lockable manner on the armoured housing (11) and of which the movement direction (Y) is oriented transversely to the insertion direction (X) of the securing bolt (40).

3. Security device according to either of the preceding claims, wherein the securing bolt (40) is of a cylindrical basic shape and the blocking contour (41) is designed in the form of an annular groove or of an annular projection beyond the cylinder surface.

4. Security device according to one of the preceding claims, wherein one of the side plates (14, 15) has arranged on it a lock carrier (20), in which a lock (21) is accommodated in a direction transverse to the insertion direction (X) of the securing bolt (40).

5. Security device according to one of the preceding claims, wherein the securing bolt (40) is mounted in captive fashion in at least one of the side plates (14, 15).

6. Security device according to one of the preceding claims, wherein a T-shaped widening (24) is provided at the inner end of a guide stub (18').

7. Security device according to one of the preceding claims, wherein the security device (10) has an additional blocking body (25), which is mounted in a movable and lockable manner essentially parallel to the insertion direction (X) of the securing bolt (40) and, in the blocked state, engages in a blocking opening (60) on the coupling housing (51).

8. Security device according to one of the preceding claims, wherein the securing bolt (40), in the inserted state, blocks access to fastening means (63) by way of which the lock (21) is fixed in the lock carrier (20).

9. Security device according to one of the preceding claims, wherein the security device (10) comprises at least one positioning plate (54, 55), which can be placed laterally on the coupling housing (51), and wherein the at least one positioning plate (54, 55) can be fixed to the tow bar of the vehicle trailer and comprises at least one mount (56, 57) for the guide stub or stubs (18, 19).

10. Trailer coupling having a security device according to one of the preceding claims, wherein the trailer coupling (50) has an actuating handle (58) for a friction coupling (59), and the lever cap (12) has side walls which slope down essentially vertically and engage laterally over the closing handle (53) of the trailer coupling (50) with such a snug fit that the actuating handle (58) of the friction coupling (59) can be lowered into its closed position.

## Revendications

1. Dispositif de protection comprenant un boîtier blindé (11) destiné à être placé sur un attelage de remorque (50) d'une remorque de véhicule, le boîtier blindé (11) présentant une coiffe de levier (12) destinée à recouvrir la prise de fermeture (53) de l'attelage de remorque (50) amenée dans la position de fermeture, ainsi qu'au moins deux panneaux latéraux (14, 15) s'étendant vers le bas depuis la coiffe de levier, qui, dans l'état monté du dispositif de protection (10), viennent en prise latéralement autour du boîtier d'attelage (51), et des logements de boulons (16, 17) étant prévus dans les panneaux latéraux (14, 15), dans lesquels peut être inséré un boulon de fixation (40) du dispositif de protection (10), qui, dans l'état monté, vient en prise autour du côté du boîtier d'attelage (51) opposé à la prise de fermeture (53), un tourillon de guidage orienté vers l'intérieur (18, 19) étant prévu au niveau d'au moins l'un des panneaux latéraux (14, 15), lequel, dans l'état monté du dispositif de protection (10), s'engage dans un logement correspondant (56, 57) sur le boîtier d'attelage (51).

2. Dispositif de protection selon la revendication 1, dans lequel le boulon de fixation (40) présente un contour de verrouillage (41) pour recevoir un corps de verrou (22) supporté de manière déplaçable et de manière à pouvoir être fermé sur le boîtier blindé (11), dont le sens de déplacement (Y) est orienté transversalement à la direction d'enfichage (X) du boulon de fixation (40).

3. Dispositif de protection selon l'une quelconque des revendications précédentes, dans lequel le boulon de fixation (40) présente une forme de base cylindrique et le contour de verrouillage (41) est réalisé sous forme de rainure annulaire ou sous forme de dépassement annulaire au-delà de la surface cylindrique.

4. Dispositif de protection selon l'une quelconque des revendications précédentes, dans lequel un support de serrure (20) est disposé au niveau de l'un des panneaux latéraux (14, 15), dans lequel est reçue une serrure (21) transversalement à la direction d'enfichage (X) du boulon de fixation (40).

5. Dispositif de protection selon l'une quelconque des revendications précédentes, dans lequel le boulon de fixation (40) est supporté de manière imperdable dans au moins l'un des panneaux latéraux (14, 15).

6. Dispositif de protection selon l'une quelconque des revendications précédentes, dans lequel un élargissement en forme de T (24) est prévu à l'extrémité intérieure d'un tourillon de guidage (18').

7. Dispositif de protection selon l'une quelconque des revendications précédentes, dans lequel le dispositif de protection (10) présente un corps de verrouillage supplémentaire (25) qui est supporté de manière déplaçable et de manière à pouvoir être fermé essentiellement parallèlement à la direction d'enfichage (X) du boulon de fixation (40) et qui vient en prise dans l'état verrouillé dans une ouverture de verrouillage (60) sur le boîtier d'attelage (51).

8. Dispositif de protection selon l'une quelconque des revendications précédentes, dans lequel le boulon de fixation (40), dans l'état enfiché, bloque un accès à des moyens de fixation (63) avec lesquels la serrure (21) est fixée dans le support de serrure (20).

9. Dispositif de protection selon l'une quelconque des revendications précédentes, dans lequel le dispositif de protection (10) comprend au moins une plaque d'application (54, 55) qui peut être posée latéralement sur le boîtier d'attelage (51) et dans lequel l'au moins une plaque d'application (54, 55) peut être connectée fixement au timon de traction de la remorque de véhicule et comprend au moins un logement (56, 57) pour le ou les tourillons de guidage (18, 19).

10. Attelage de remorque comprenant un dispositif de protection selon l'une quelconque des revendications précédentes, dans lequel l'attelage de remorque (50) présente une prise d'actionnement (58) pour un accouplement à friction (59) et la coiffe de levier (12) présente essentiellement des parois latérales descendant essentiellement verticalement qui viennent en prise étroitement latéralement par-dessus la prise de fermeture (53) de l'attelage de remorque (50), de telle sorte que la prise d'actionnement (58) de l'accouplement à friction (59) puisse être abaissée dans sa position fermée.
